# EUROPÄISCHE PATENTSCHRIFT

(11) **EP 1 884 676 B1**
(45) Veröffentlichungstag und Bekanntmachung des Hinweises auf die Patenterteilung: **21.08.2013**
(21) Anmeldenummer: 07014261.7
(22) Anmeldetag: 20.07.2007
(51) Int. Cl.: F16D 25/12, B60K 23/02, F16D 23/14

(54) **Kupplungsvorrichtung, insbesondere Kraftfahrzeug-Kupplungsvorrichtung**
Clutch device, in particular motor vehicle clutch device
Dispositif d'embrayage, en particulier dispositif d'embrayage pour véhicule automobile

(30) Priorität: 02.08.2006 DE 102006036013
(43) Veröffentlichungstag der Anmeldung: 06.02.2008
(73) Patentinhaber: ZF Friedrichshafen AG, 88038 Friedrichshafen (DE)
(72) Erfinder: Peterseim, Michael, 97493 Bergrheinfeld (DE); Pagels, Olaf, 97493 Bergrheinfeld (DE); Feldhaus, Reinhard, 97502 Euerbach (DE); Riess, Thomas, 97437 Hassfurt (DE); Ebert, Angelika, 97453 Schonungen (DE); Kister, Igor, 97076 Würzburg (DE); Müller, Thorsten, 88048 Friedrichshafen (DE)

(56) Entgegenhaltungen:
- DE-A1- 19 957 271
- DE-A1-102006 053 761
- US-A1- 2002 020 600

## Beschreibung

Die Erfindung betrifft eine Kupplungsvorrichtung, insbesondere eine Kraftfahrzeug-Kupplungsvorrichtung, mit einer Kupplungsscheibe, die mittels eines Federmittels zwischen einem Schwungrad und einer Anpressplatte einspannbar ist, wobei die Kupplungsvorrichtung bei bestimmungsgemäßem Gebrauch an einem Motorgehäuse befestigt ist, wobei ein hydraulisches Betätigungsmittel vorhanden ist, mit dem ein auf die Anpressplatte wirkender Wirkabschnitt der Federmittel axial beweglich ist und wobei das hydraulische Betätigungsmittel mindestens eine Hydraulikleitung aufweist, die durch eine Öffnung in einer die Kupplungsvorrichtung teilweise umgebenden Getriebeglocke nach außen hindurchtritt.

Kupplungsvorrichtungen dieser Art sind beispielsweise aus der DE 39 40 917 A1 bekannt. Ähnliche Vorrichtungen sind in der DE 42 08 906 B4 und in der DE 195 32 509 A1 beschrieben. Eine Kupplungsscheibe befindet sich hier zwischen einer Anpressplatte und einem Schwungrad, das drehfest mit dem Abtrieb einer Brennkraftmaschine verbunden ist. Die Anpressplatte wird dabei von einer Feder (Federmittel) und insbesondere von einem Wirkabschnitt derselben axial beaufschlagt, so dass ein Reibmoment über die Kupplungsvorrichtung übertragen werden kann.

Zur axialen Bewegung der Feder bzw. deren Wirkabschnitt ist in der DE 39 40 917 A1 ein gattungsgemäßer hydraulisch arbeitender Aktuator (Betätigungsmittel) vorgesehen. Dieser kann an einer die Kupplungsvorrichtung abdeckenden Getriebeglocke drehfest angeordnet sein. Der Aktuator ist dabei mittels eines Lagers, beispielsweise eines Rillenkugellagers, rotatorisch zu einem Druckplattengehäuse gelagert, das die Druckplatte umgibt. Damit kann bei Rotation des Druckplattengehäuses der Aktuator ortsfest gehalten werden.

Diese Bauform hat den Vorteil, dass ein günstiger Kraftfluss bei der Beaufschlagung der Anpressplatte vorliegt. Der Kraftfluss ist im Kupplungsgehäuse geschlossen. Dadurch werden angrenzende Lager, beispielsweise für die Kurbelwelle oder das Zweimassenschwungrad, beim Betätigen des Aktuators nicht belastet.

Bei der Montage wird zumeist das integrierte Betätigungsmittel mit der Kupplung und dem Motor vormontiert. Anschließend wird das Getriebe montiert. Ein Zugriff auf bzw. in die Getriebeglocke ist danach nicht mehr möglich. Daher muss schon vorher die Hydraulikleitung richtig positioniert werden. Insbesondere muss sie durch eine Öffnung in der Getriebeglocke hindurch nach außen geführt werden. Ist die Vormontage erfolgt, wird von außen an der Hydraulikleitung ein Hydraulikfluid-Versorgungsmittel befestigt. Dabei treten erhebliche Fügekräfte auf.

Im Stand der Technik wird zumeist das Betätigungsmittel innen am Getriebe, d. h. an der Getriebeglocke befestigt, so dass die Fügekräfte aufgenommen werden können. Diese Möglichkeit besteht beim integriert ausgeführten System infolge der Vormontage am Motor nicht. Daher kann es im schlimmsten Falle beim Anschluss der Hydraulikfluid-Versorgungsmittel infolge der hohen Fügekräfte zu Zerstörungen von Bauteilen kommen.

Um bei einer Kupplungsvorrichtung , die bei der Montage nach außen geführte Hydraulikleitung in vereinfachter Weise mit einem Hydraulikfluid-Versorgungsmittel zu verbinden ohne Bauteilbeschädigungen befürchten zu müssen, d.h. die entstehenden Fügekräfte bei der Verbindung der Hydraulikleitung mit beispielsweise einer anderen Leitung sollen sicher aufgenommen werden können, ist es beispielsweise aus der US-A-2002/0020600 (Fig.7, Absätze 121,122) oder auch aus der dem Oberbegriff des Anspruchs 1 entsprechenden DE-A- 19957271 bekannt, zumindest zeitweise angeordnete Mittel zur Aufbringung einer Gegenkraft auf die Hydraulikleitung vorzusehen, wenn diese in Richtung ihrer Achse nach innen in die Getriebeglocke gedrückt wird, wobei die Getriebeglocke eine Öffnung aufweist, die größe ist als der Durchmesser der Hydraulikleitung.

Die beim Anbringen eines Hydraulikfluid-Versorgungselements an das Ende der Hydraulikleitung entstehenden Fügekräfte werden also mit spezifischen Mitteln aufgenommen, so dass ein ordnungsgemäßer Fügeprozess ohne Beschädigung von Bauteilen möglich wird.

Um den Einbau weiter zu vereinfachen werden gemäβ vorliegenden Erfindung die kennzeichnenden Merkmale in Kombination mit dem Oberbegriff des Anspruchs 1 vorgeschlagen. das eine Aufnahme zur Halterung eines Teils der Hydraulikleitung aufweist, wobei die Aufnahme zur Anlage auf der Außenseite der Getriebeglocke ausgebildet ist.

Erfindungsgemäß ist das Abstützelement ringscheibenförmig ausgebildet. Das ringscheibenförmige Abstützelement kann dabei, zwecks leichter Verbindung mit der Hydraulikleitung einen radialen Schlitz aufweisen.

Nicht zwingend, jedoch bevorzugt ist vorgesehen, dass das Abstützelement bleibend mit der Getriebeglocke verbunden ist.

Vorzugsweise hat die Hydraulikleitung an ihrem von dem Betätigungsmittel entfernten Ende eine Durchmesservergrößerung. Damit kann in besonders einfacher Weise - insbesondere bei der zuletzt genannten Lötung - ein Einhängen des Endes der Hydraulikleitung in das scheibenförmige Abstützelement bei Sicherstellung einer

guten Anlage des im Durchmesser vergrößerten Endes der Hydraulikleitung an der Ringscheibe erfolgen.

Vorzugsweise weist das Betätigungsmittel einen axial beweglichen Ringkolben auf, der in einem ringförmigen Aufnahmeraum eines Zylinders angeordnet ist, wobei der Ringkolben und der Zylinder konzentrisch zur Achse der Kupplungsvorrichtung angeordnet sind.

Die Anpressplatte ist zumeist von einem Druckplattengehäuse umgeben. In diesem Falle kann zwischen dem Druckplattengehäuse und dem Betätigungsmittel ein Lager angeordnet sein. Dieses ist bevorzugt als Kugel- oder Wälzlager ausgebildet; besonders bevorzugt ist es ein Rillenkugellager.

Hierdurch wird es möglich, die Hydraulikleitung, die bei der Montage der Einheit durch eine Öffnung in der Getriebeglocke nach außen ragt, zuverlässig mit einem weiteren Fluidversorgungs-Bauteil zu verbinden, ohne eine Beschädigung anderer Bauteile befürchten zu müssen. Die Fügekräfte werden also in definierter Weise aufgenommen, so dass der Montageprozess verbessert ist.

In der Zeichnung ist ein Ausführungsbeispiel der Erfindung dargestellt. Es zeigen:
- Fig. 1: den Radialschnitt durch eine nicht erfindungsgemäße Kraftfahrzeug-Kupplungsvorrichtung,
- Fig. 2: eine weitere nicht erfindungsgemäße Ausführungsform einer Kraftfahrzeug-Kupplungsvorrichtung,
- Fig. 3: eine erfindungsgemäße Ausführungsform einer Kraftfahrzeug-Kupplungsvorrichtung und
- Fig. 4: den Schnitt bzw. die Ansicht A-B gemäß Fig. 3.

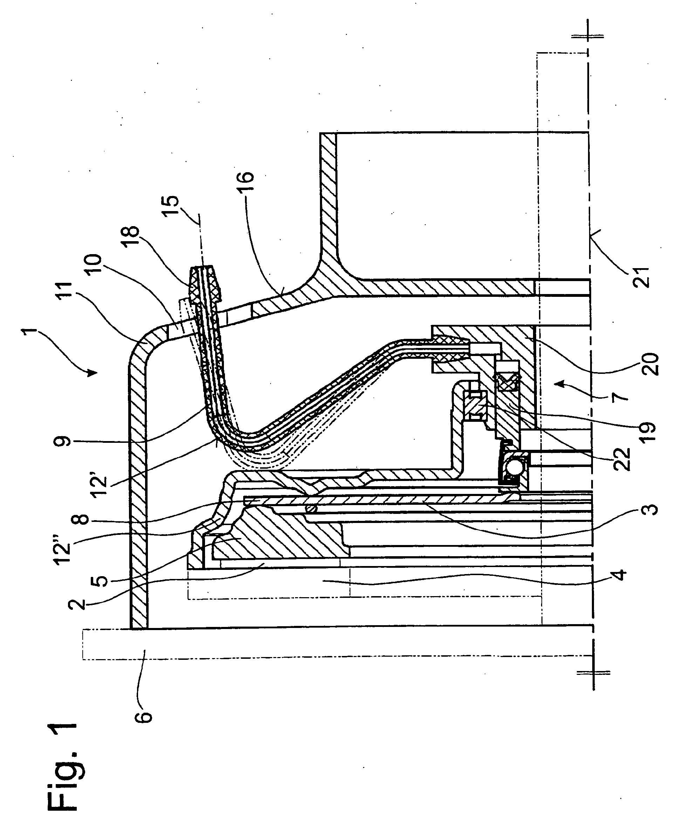

In Fig. 1 ist eine Kraftfahrzeug-Kupplungsvorrichtung 1 zu sehen, die zur Übertragung des Drehmoments von einem Verbrennungsmotor zu einem Getriebe dient. Die Kupplungsvorrichtung 1 ist als Reibungskupplung ausgeführt und hat eine Kupplungsscheibe 2, die zwischen einer Anpressplatte 5 und einem Schwungrad 4 angeordnet ist, Die Anpressplatte 5 kann von einem Federmittel 3 axial mit einer Kraft beaufschlagt werden, wodurch es zum Reibschluss zwischen Anpressplatte 5, Kupplungsscheibe 2 und Schwungrad 4 kommt. So wird ein Drehmoment vom Verbrennungsmotor zum Getriebe übertragen.

Hierzu wird das Federmittel 3, vorzugsweise als Tellerfeder ausgebildet, bzw. ein Wirkabschnitt 8 des Federmittels 3, das auf die Anpressplatte 5 drückt, von einem Kupplungsausrücksystem axial bewegt. Das Kupplungsausrücksystem besteht im wesentlichen aus einem Betätigungsmittel 7, das als hydraulischer Aktuator ausgeführt ist. Das Betätigungsmittel hat einen Zylinder 20, der koaxial um die Achse 21 der Kupplungsvorrichtung herum angeordnet ist. In einer ringraumartigen Ausnehmung im Zylinder 20 ist ein als Ringkolben 19 ausgebildeter Kolben angeordnet. Dabei wird zwischen dem Zylinder 20 und dem Kolben 19 ein Druckraum eingeschlossen, der über eine Hydraulikleitung 9 mit Druckfluid, vorzugsweise mit Hydrauliköl, beaufschlagt werden kann. Die Hydraulikleitung 9 wird von dem Betätigungsmittel 7 durch eine Öffnung 10 in einer Getriebeglocke 11 hindurch nach außen geführt, wo eine Verbindung zu einer nicht dargestellten Hydraulikölquelle hergestellt wird.

Die Anpressplatte 5 ist zusammen mit der Kupplungsscheibe 2 von einem Druckplattengehäuse 12" umgeben, das um die Achse 21 rotieren kann und das am Schwungrad 4 festgelegt ist. Das Betätigungsmittel 7 ist indes ortsfest angeordnet. Die Relativ-Drehbewegung zwischen dem Betätigungsmittel 7 und dem Druckplattengehäuse 12" wird durch ein Lager 22 gewährleistet.

Das von dem Betätigungsmittel 7 entfernte Ende der Hydraulikleitung 9 weist eine Durchmesservergrößerung 18 auf. An diese ist - gegen Ende der Montage der gesamten Einheit - ein Element zur Versorgung mit Hydraulikfluid anzuschließen, bei dem es sich insbesondere um eine weitere Hydraulikleitung handeln kann. Das druckfeste Verbinden des Endes der Hydraulikleitung 9 mit dem weiteren Element zur Versorgung mit Hydraulikfluid hat erhebliche Fügekräfte zur Folge, die in geeigneter Weise so abgefangen werden müssen, dass es zu keiner Beschädigung anderer Bauteile der Kupplungsvorrichtung 1 kommt und dass auch das Ende der Hydraulikleitung 9 mit der Durchmesservergrößerung 18 nicht wieder in die Öffnung 10 der Getriebeglocke 11 hineinrutscht.

Demgemäß sind entsprechende zumindest zeitweise - nämlich für den Fügevorgang - angeordnete Mittel 12, 13' 13" zur Aufbringung einer Gegenkraft auf die Hydraulikleitung 9 vorgesehen, wenn diese in Richtung ihrer Achse 15 nach Innen In die Getriebeglocke 11 gedrückt wird.

Bei der Lösung gemäß Fig. 1 ist dies in besonders einfacher Weise bewerkstelligt. Hier bestehend die besagten Mittel zur Aufbringung einer Gegenkraft auf die Hydraulikleitung 9 aus einem gebogenen Abschnitt 12' der aus metallischem Rohr bestehenden Hydraulikleitung 9, wobei die Biegung 12' so geformt ist, dass sie zur Anlage auf der äußeren Oberfläche des Druckplattengehäuses 12" ausgebildet ist, das als weiteres Bauteil der Mittel fungieren.

Wie es anhand der gestrichelten Linien in Fig. 1 gesehen werden kann, legt sich beim Aufbringen einer Fügekraft in Richtung der Achse 15 der Hydraulikleitung 9 der gebogene Abschnitt 12' an das Druckplattengehäuse 12" an, so dass aufgrund der Eigensteifigkeit des metallischen Rohrs 9 eine hinreichende Widerstandskraft gegen die Fügekräfte gegeben ist. Nach Wegnahme der Fügekräfte nimmt die Hydraulikleitung 9 wieder die mit ausgezogenen Linien dargestellte Position ein.

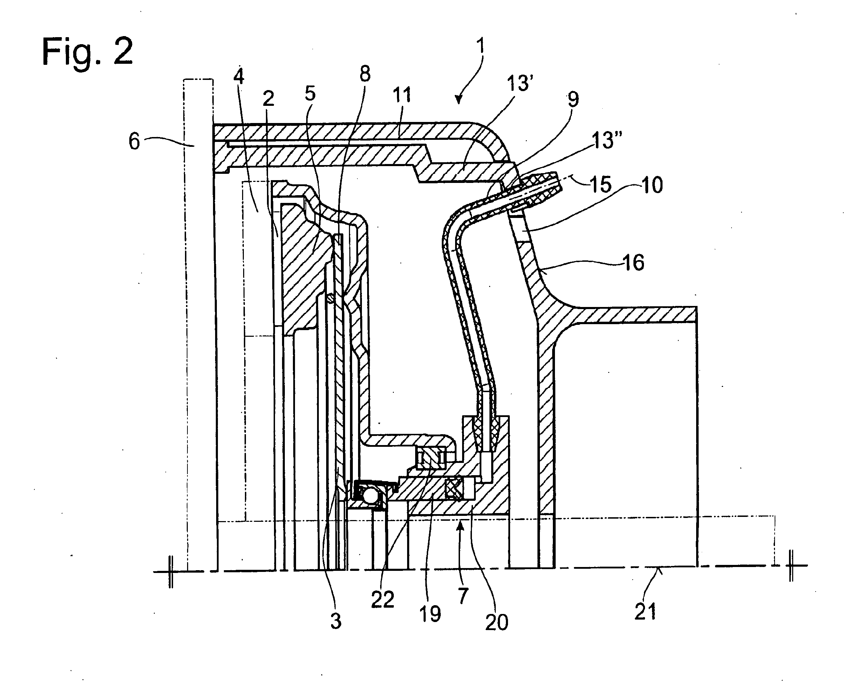

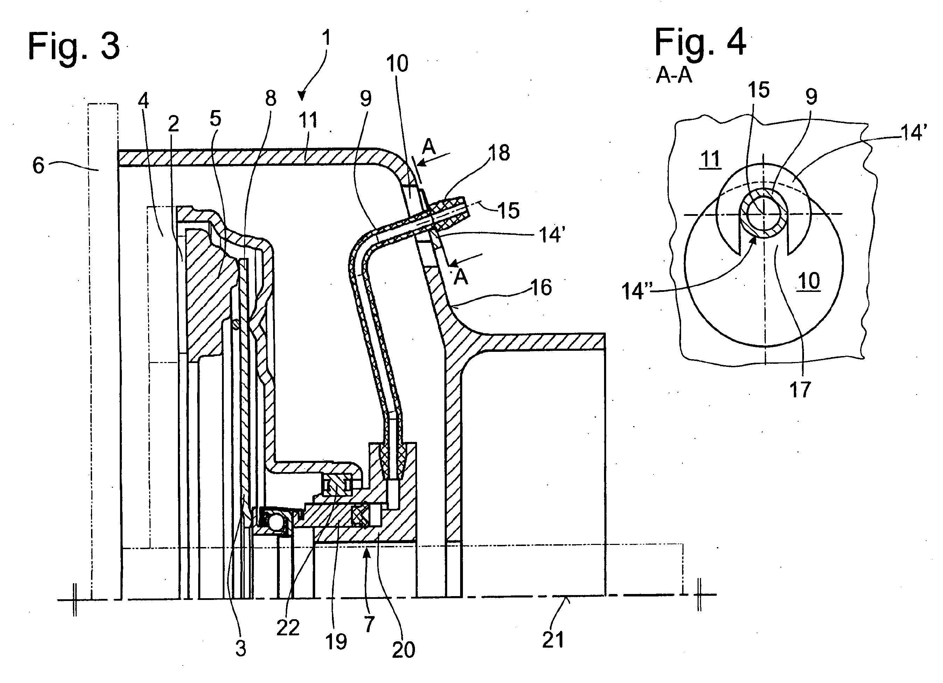

Die Lösung gemäß Fig. 2 unterscheidet von der Ausgestaltung nach Fig. 1 darin, dass hier die Mittel zur Aufbringung einer Gegenkraft auf die Hydraullkleltung durch ein Halteelement 13' sowie durch eine Aufnahme 13" für die Hydraulikleitung 9 gebildet werden. Wie gesehen werden kann, ist die Aufnahme 13" als stabförmiger Halter ausgebildet, der an der einen Seite (in Fig. 2 links) mit einer nicht dargestellten Schraubverbindung an dem Motorgehäuse 6 festgelegt ist. Am anderen Ende des Halteelements 13" (In Fig. 2 rechts) ist die Aufnahme 13" für die Hydraulikleitung 9 vorgesehen. Die Aufnahme 13" kann z. B. durch eine Bohrung mit radial verlaufendem Schlitz (ähnlich wie in Fig. 4, s. unten) aufgeführt sein, so dass die Hydraulikleitung 9 leicht in die Aufnahme 13" eingehängt werden kann. Wird in Richtung der Achse 15 eine Fügekraft aufgebracht, die die Hydraulikleitung 9 in das Innere der Getriebeglocke 11 schieben möchte, erzeugt das Mittel eine entsprechende Gegenkraft, so dass das Ende der Hydraulikleitung 9 mit der Durchmesservergrößerung 18 in Position gehalten wird.

Die Montage des Halteelements 13' erfolgt vor der Montage Motor-Getriebe.

Eine erfindungsgemäße Krafffahrzeug-Kupplungsvorrichtung ist in Fig. 3 und Fig. 4 skizziert. Hier sind ebenfalls Mittel zur Aufbringung einer Gegenkraft auf die Hydraulikleitung 9 während des Fügevorgangs vorgesehen. Die Mittel bestehen hier aus einem Abstützelement 14', das eine Aufnahme 14" für die Hydraulikleitung 9 aufweist. Das Abstützelement 14' ist als Ringscheibe ausgebildet, wie es am besten in Fig. 4 gesehen werden kann, wo die Stellung während des Fügens eines Hydraulikfluid-Versorgungsmittels am Ende der Hydraulikleitung 9 dargestellt ist.

Die Ringscheibe 14' weist einen radialen Schlitz 17 auf, durch den die Aufnahme 14" für die Hydraulikleitung 9 gebildet wird.

Bei bestimmungsgemäßem Gebrauch legt sich - während des Fügevorgangs - wie in Fig. 4 dargestellt das scheibenförmige Abstützelement 14' an die Außenseite 16 der Getriebeglocke 11 an, wodurch eine Anlagefläche vorliegt, über die die Gegenkraft zur Fügekraft übertragen werden kann, wenn eine Kraft in Richtung der Achse 15 auf das Ende der Hydraulikleitung 9 aufgegeben wird.

Wie in Fig. 4 weiter gesehen werden kann, wird zu diesem Zweck die Aufnahme 14" so aus dem Zentrum der Öffnung 10 in der Getriebeglocke 11 verschoben, dass es zu einer Auflage des Abstützelements 14' auf der Außenseite 16 kommt.

Der Vorteil der Lösung gemäß Fig. 3 und Fig. 4 besteht darin, dass die Mittel nach dem Fügen der Hydraulikleitung 9 wieder entfernt werden können. Erfindungsgemäß ist also bereits ein nur zeitweiliges Anordnen der erläuterten Mittel ausreichend.

Da im Ausführungsbeispiel nach Fig. 3 und Fig. 4 der Außendurchmesser der Ringscheibe 14' kleiner ist als der Durchmesser der Öffnung 10, könnte vorliegend auch eine feste Verbindung zwischen Ringscheibe 14' und Hydraulikleitung 9 vorgesehen werden, wobei vor der Montage der Hydraulikleitung 9 die Ringscheibe 14' fest an der Leitung 9 angeordnet wird.

Der Erfindungsvorschlag ermöglicht eine problemlose Fügung des Anschlusses eines Fluidversorgungs-Elements an das eine Ende der Hydraulikleitung 9, ohne dass die Gefahr besteht, dass Bauteile durch die Fügekräfte beschädigt werden bzw. dass das Ende der Hydraulikleitung 9 nach innen in die Getriebeglocke 11 hineinrutscht.

Bei dem Betätigungsmittel 7 kann es sich um ein Kolben-Zylinder-System in gezogener oder gedrückter Bauart handeln.

Die vorgeschlagene Vorrichtung kann als Ausrücksystem oder als Einrücksystem ausgebildet sein. Bei den dargestellten Kupplungsvorrichtungen handelt es sich um ein hydraulisches Ausrücksystem, das als sogenannter CSC (konzentrischer Nehmerzylinder) ausgeführt ist.

### Bezugszeichenliste

- 1: Kupplungsvorrichtung
- 2: Kupplungsscheibe
- 3: Federmittel
- 4: Schwungrad
- 5: Anpressplatte
- 6: Motorgehäuse
- 7: Betätigungsmittel
- 8: Wirkabschnitt der Federmittel
- 9: Hydraulikleitung
- 10: Öffnung in der Getriebeglocke
- 11: Getriebeglocke

- 12': gebogener Abschnitt der Hydraulikleitung
- 12": weiteres Bauteil (Druckplattengehäuse)
- 13': Halteelement
- 13": Aufnahme
- 14': Abstützelement
- 14": Aufnahme
- 15: Achse
- 16: Außenseite der Getriebeglocke
- 17: Schlitz
- 18: Durchmesservergrößerung
- 19: Ringkolben
- 20: Zylinder
- 21: Achse
- 22: Lager

## Patentansprüche

1. Kupplungsvorrichtung (1), insbesondere Kraftfahrzeug-Kupplungsvorrichtung, mit einer Kupplungsscheibe (2), die mittels eines Federmittels (3) zwischen einem Schwungrad (4) und einer Anpressplatte (5) einspannbar ist, wobei die Kupplungsvorrichtung (1) bei bestimmungsgemäßem Gebrauch an einem Motorgehäuse (6) befestigbar ist, wobei ein hydraulisches Betätigungsmittel (7) vorhanden ist, mit dem ein auf die Anpressplatte (5) wirkender Wirkabschnitt (8) der Federmittel (3) axial beweglich ist und wobei das hydraulische Betätigungsmittel (7) mindestens eine Hydraulikleitung (9) aufweist, die durch eine Öffnung (10) in einer die Kupplungsvorrichtung (1) teilweise umgebenden Getriebeglocke (11) nach außen hindurchtritt, wobei zumindest zeitweise angeordnete Mittel zur Aufbringung einer Gegenkraft auf die Hydraulikleitung (9) wirksam sind, wenn diese in Richtung ihrer Achse (15) nach innen in die Getriebeglocke (11) gedrückt wird, wobei die Getriebeglocke eine Öffnung (10) aufweist, die größer ist als der Durchmesser der Hydraulikleitung (9) und wobei die Mittel (14) durch ein scheibenförmiges Abstützelement (14') gebildet werden, das eine Aufnahme (14") zur Halterung eines Teils der Hydraulikleitung (9) aufweist,
**dadurch gekennzeichnet,**
**dass** das scheibenförmige Abstützelement eine Ringscheibe (14') ist, deren Außendurchmesser kleiner ist als der Durchmesser der Öffnung (10), und dass die Ringscheibe, die mit der Hydraulikleitung in Eingriff steht, durch Verschieben zur Anlage auf der Außenseite der Getriebeglocke (11) kommen kann.

2. Kupplungsvorrichtung nach Anspruch 1, **dadurch gekennzeichnet, dass** das ringscheibenförmige Abstützelement (14') einen radialen Schlitz (17) aufweist.

3. Kupplungsvorrichtung nach einem der Ansprüche 1 oder 2, **dadurch gekennzeichnet, dass** das Abstützelement (14') bleibend mit der Getriebeglocke (11) verbunden ist.

4. Kupplungsvorrichtung nach einem der Ansprüche 1 bis 3, **dadurch gekennzeichnet, dass** die Hydraulikleitung (9) an ihrem von dem Betätigungsmittel (7) entfernten Ende eine Durchmesservergrößerung (18) aufweist.

5. Kupplungsvorrichtung nach einem der Ansprüche 1 bis 4, **dadurch gekennzeichnet, dass** das Betätigungsmittel (7) einen axial beweglichen Ringkolben (19) aufweist, der in einem ringförmigen Aufnahmeraum eines Zylinders (20) angeordnet ist, wobei der Ringkolben (19) und der Zylinder (20) konzentrisch zur Achse (21) der Kupplungsvorrichtung (1) angeordnet sind.

## Claims

1. Clutch apparatus (1), in particular motor-vehicle clutch apparatus, having a clutch plate (2) which can be clamped by means of a spring means (3) between a flywheel (4) and a pressure plate (5), it being possible in the case of use as intended for the clutch apparatus (1) to be fastened to an engine housing (6), there being a hydraulic actuating means (7), by way of which an active section (8) of the spring means (3) which acts on the pressure plate (5) can be moved axially, and the hydraulic actuating means (7) having at least one hydraulic line (9) which passes to the outside through an opening (10) in a transmission bell housing (11) which surrounds the clutch apparatus (1) partially, means for applying a counterforce which are arranged at least temporarily being active on the hydraulic line (9) when the latter is pressed inwards in the direction of its axis (15) into the transmission bell housing (11), the transmission bell housing having an opening (10) which is larger than the diameter of the hydraulic line (9), and the means (14) being formed by a disc-shaped supporting element (14') which has a receptacle (14") for holding a part of the hydraulic line (9), **characterized in that** the disc-shaped supporting element is an annular disc (14'), the external diameter of which is smaller than the diameter of the opening (10), and **in that** the annular disc which is in engagement with the hydraulic line can come into contact on the outer side of the transmission bell housing (11) by way of being displaced.

2. Clutch apparatus according to Claim 1, **characterized in that** the annular disc-shaped supporting element (14') has a radial slot (17).

3. Clutch apparatus according to either of Claims 1 and 2, **characterized in that** the supporting element (14') is connected permanently to the transmission bell housing (11).

4. Clutch apparatus according to one of Claims 1 to 3, **characterized in that** the hydraulic line (9) has a portion (18) of increased diameter at its end which is remote from the actuating means (7).

5. Clutch apparatus according to one of Claims 1 to 4, **characterized in that** the actuating means (7) has an axially movable annular piston (19) which is arranged in an annular receiving space of a cylinder (20), the annular piston (19) and the cylinder (20) being arranged concentrically with respect to the axis (21) of the clutch apparatus (1).

## Revendications

1. Dispositif d'embrayage (1), en particulier dispositif d'embrayage pour véhicule automobile, comprenant un disque d'embrayage (2), qui peut être serré à l'aide d'un moyen de ressort (3) entre un volant d'inertie (4) et un plateau de pressage (5), le dispositif d'embrayage (1), dans le cas d'une utilisation conforme, pouvant être fixé à un carter de moteur (6), un moyen d'actionnement hydraulique (7) étant prévu, avec lequel une section active (8) du moyen de ressort (3) agissant sur le plateau de pressage (5) peut être déplacée axialement et le moyen d'actionnement (7) hydraulique présentant au moins une conduite hydraulique (9) qui traverse vers l'extérieur une ouverture (10) dans une cloche de transmission (11) entourant partiellement le dispositif d'embrayage (1), au moins des moyens disposés temporairement pour appliquer une force conjuguée à la conduite hydraulique (9) étant activés lorsque celle-ci est pressée vers l'intérieur dans la cloche de transmission (11) dans la direction de son axe (15), la cloche de transmission présentant une ouverture (10) qui est plus grande que le diamètre de la conduite hydraulique (9) et les moyens (14) étant formés par un élément d'appui en forme de disque (14'), lequel présente un logement (14") pour retenir une partie de la conduite hydraulique (9), **caractérisé en ce que** l'élément d'appui en forme de disque est un disque annulaire (14'), dont le diamètre extérieur est plus petit que le diamètre de l'ouverture (10), et **en ce que** le disque annulaire, qui est en prise avec la conduite hydraulique, peut, par un déplacement, venir en appui contre le côté extérieur de la cloche de transmission (11).

2. Dispositif d'embrayage selon la revendication 1, **caractérisé en ce que** l'élément d'appui en forme de disque (14') présente une fente radiale (17).

3. Dispositif d'embrayage selon l'une quelconque des revendications 1 ou 2, **caractérisé en ce que** l'élément d'appui (14') est connecté de manière permanente à la cloche de transmission (11).

4. Dispositif d'embrayage selon l'une quelconque des revendications 1 à 3, **caractérisé en ce que** la conduite hydraulique (9) présente au niveau de son extrémité opposée au moyen d'actionnement (17) une augmentation de diamètre (18).

5. Dispositif d'embrayage selon l'une quelconque des revendications 1 à 4, **caractérisé en ce que** le moyen d'actionnement (7) présente un piston annulaire (19) déplaçable axialement qui est disposé dans un espace de réception annulaire d'un cylindre (20), le piston annulaire (19) et le cylindre (20) étant disposés de manière concentrique par rapport à l'axe (21) du dispositif d'embrayage (1).
